## Europäisches Patentamt

## European Patent Office

## Office européen des brevets

(19)

(11) Veröffentlichungsnummer: **0 245 740 B1**

(12)

# EUROPÄISCHE PATENTSCHRIFT

(45) Veröffentlichungstag der Patentschrift: **28.11.90**

(51) Int. Cl.⁵: **G01S 7/52, G01S 15/89**

(21) Anmeldenummer: **87106410.1**

(22) Anmeldetag: **04.05.87**

(54) Verfahren und Vorrichtung zur digitalen Verzögerung von Ultraschallsignalen im Empfangsfall.

(30) Priorität: **16.05.86 DE 3616498**

(43) Veröffentlichungstag der Anmeldung:
**19.11.87 Patentblatt 87/47**

(45) Bekanntmachung des Hinweises auf die Patenterteilung:
**28.11.90 Patentblatt 90/48**

(84) Benannte Vertragsstaaten:
**DE FR GB NL**

(56) Entgegenhaltungen:
**EP-A- 0 091 375**
**DE-A- 2 651 786**
**GB-A- 2 158 329**
**US-A- 4 070 642**
**US-A- 4 099 419**
**US-A- 4 127 034**

**ULTRASONICS, Band 11, Nr. 4, Juli 1973, Seiten 165-173, Guildford, GB; S. LEES et al.: "DONAR: a computer processing system to extend ultrasonic pulse-echo testing"**

(73) Patentinhaber: **Siemens Aktiengesellschaft, Wittelsbacherplatz 2, D-8000 München 2(DE)**

(72) Erfinder: **Saugeon, Ulrich, Dipl.-Ing., Weltenburger Strasse 175, D-8500 Nürnberg 60(DE)**

## Beschreibung

Die Erfindung betrifft ein Verfahren zur Verzögerung eines Ultraschall-Empfangssignals, welches von einer Grenzfläche im Innern eines Körpers reflektiert wurde, um einen vorgegebenen Verzögerungswert, bei dem das Empfangssignal mit einer Abtastfrequenz abgetastet wird, die so gewonnenen Abtastsignale digitalisiert werden und die digitalisierten Abtastsignale im Takt der Abtastfrequenz verzögert werden.

Die Erfindung betrifft weiterhin eine Einrichtung zur Durchführung des eingangs genannten Verfahrens, die eine digital arbeitende mehrstufige Verzögerungseinrichtung mit je einem Ausgang zwischen benachbarten Stufen umfaßt, deren einzelne Stufen jeweils die digitalisierten Abtastwerte des Ultraschall-Empfangssignals im Takt der Abtastfrequenz verzögern.

In der medizinischen Ultraschalltechnik ist die Verzögerung von Ultraschallechos eines der wesentlichen Probleme. Für den Empfangsfall sind bisher analog arbeitende Verfahren und Vorrichtungen, wie z.B. LC-Leitungen, Mischtechniken oder CCD-Lösungen, bevorzugt worden. Digitale Verzögerungsverfahren sind im wesentlichen nur für den Sendefall vorgesehen.

Insbesondere bei Phased-Array-Geräten mit dynamischer Fokussierung des Empfangsfokus über viele Fokuslagen hinweg, wie z.B. in der US-Patentschrift 4 116 229 angegeben, ist eine komplizierte Verzögerungstechnik notwendig. Für den Schwenk des Ultraschallsignals sind relativ lange Verzögerungszeiten von bis z.B. 20 µs gängig. Die Krümmung der Antenne, die je nach empfangener Fokuslage unterschiedlich ist, wird durch feinere Verzögerungsschritte zwischen benachbarten Wandlerelementen erreicht. Die Bildqualität eines dargestellten Ultraschallbildes ist umso·besser und die Darstellung umso schärfer, je besser es gelingt, rechnerisch ermittelte Verzögerungszeiten einzustellen und einzuhalten. Durch den im Ultraschallgerät vorgegebenen Takt von z.B. 20 oder 30 MHz sind in der Regel lediglich Zeitdifferenzen von z.B. 50 bzw. 33 ns realisierbar.

Ein Verfahren und eine Einrichtung zur Durchführung des Verfahrens der eingangs genannten Art zur digitalen Verzögerung eines Ultraschallsignals ist aus der US-Patentschrift 4 127 034 bekannt. Dort wird bei einem Ultraschall-Bildsystem mit einem linearen Wandlerarray das von einem Elementarwandler empfangene digitalisierte Echosignal digital verzögert. Die dazu vorgesehene Verzögerungseinrichtung besteht aus einem Schieberegister mit Anzapfungen und einem Multiplexer, der die einem vorgegebenen Verzögerungswert entsprechende Anzapfung auswählt. Der kleinste Verzögerungswert ist durch die Taktfrequenz vorgegeben. So ist bei einem Takt von 5 MHz die kleinste realisierbare Verzögerungszeit zum Fokussieren oder Strahlschwenk 200 ns. Dadurch ist die Bildqualität des dargestellten Ultraschallbildes entsprechend gering.

Aufgabe der Erfindung ist es, ein Verfahren und eine Einrichtung anzugeben, die es ermöglichen, eine hohe Genauigkeit der Zeitverzögerung zu erreichen bei dennoch niedriger Abtastfrequenz im Verhältnis zur Zeitauflösung.

Bezüglich des Verfahrens wird diese Aufgabe erfindungsgemäß dadurch gelöst, daß zwischen zwei benachbarten Abtastsignalen, deren Verzögerungswerte dem vorgegebenen Verzögerungswert am nächsten kommen, eine Mehrzahl von interpolierten Werten zu den benachbarten Abtastsignalen gebildet wird und daß aus den benachbarten Abtastsignalen und den interpolierten Werten dasjenige Signal oder derjenige Wert ausgewählt wird, dessen Verzögerung dem vorgegebenen Verzögerungswert am nächsten kommt.

Bezüglich der Verzögerungseinrichtung wird die Aufgabe erfindungsgemäß dadurch gelöst, daß die Eingänge einer ersten Auswahlschaltung mit jeweils den Ausgängen der Verzögerungseinrichtung und zwei Ausgänge der ersten Auswahlschaltung jeweils mit zwei Eingängen eines Interpolators verbunden sind, wobei die erste Auswahlschaltung zwei benachbarte Abtastwerte, deren Verzögerungswerte einem vorgegebenen Verzögerungswert am nächsten kommen, an den Interpolator übergibt, daß der Interpolator eine Anzahl von Ausgängen aufweist, die einen der beiden benachbarten Abtastwerte und eine Mehrzahl von zu den beiden benachbarten Abtastwerten interpolierten Werten ausgeben, und zwar jeweils einen Wert pro Ausgang, und daß eine zweite Auswahlschaltung mit den Ausgängen des Interpolators verbunden ist, wobei die Auswahlschaltung dasjenige abgetastete Signal oder denjenigen interpolierten Wert an ihrem Ausgang ausgibt, dessen Verzögerungswert dem vorgegebenen Verzögerungswert am nächsten kommt.

Bei Einsatz des Verfahrens oder der Verzögerungseinrichtung wird eine hohe Genauigkeit der Zeitverzögerung erzielt, die im Bereich von z.B. einem Zwanzigstel der Wellenlänge oder besser ist. Dabei wird eine relativ niedrige Abtastfrequenz im Verhältnis zur Zeitauflösung erreicht. Erzeugt der Interpolator beispielsweise zu zwei im Abstand von 50 nsec (entsprechend einer Taktfrequenz von 20 MHz) empfangenen Ultraschallsignalen drei daraus interpolierte Ultraschallsignale, also drei weitere Signale, kann eine Genauigkeit bezüglich der Zeitverzögerung erreicht werden, als ob mit 80 MHz abgetastet würde.

Ein weiterer Vorteil der digitalen Verarbeitung des empfangenen Ultraschallsignals ist die Möglichkeit der Multiplikation des Ultraschallsignals mit einer Konstanten. Dadurch kann eine dynamische, kontinuierliche Aperturabschaltung bzw. Aperturbelegung erreicht werden. Die zum Rand der Antenne liegenden Ultraschall-Wandlerelemente werden mit einem kleineren Faktor multipliziert als die in der Mitte der Antenne liegenden Ultraschallelemente. Ein weiterer Vorteil der digitalen Verzögerungstechnik im Empfangsfall ist, daß Umschaltspikes beim Umschalten von einem Verzögerungswert auf den anderen vermieden werden. Dadurch sind viele Fokuslagen während des Empfangs eines Ultraschallvektors möglich. Auch bei großen Aperturen kann eine exakte dynamische Fokussierung vorgenommen werden.

Zu der hohen Integrationsmöglichkeit bei digitalen Bauelementen kommt als wesentlicher Vorteil noch hinzu, daß sehr lange Verzögerungszeiten auf einfache Weise realisiert werden können. Mittel, die die Verzögerungszeiten digital beeinflussen können, wie z. B. die Länge eines Schieberegisters oder die Ziffer, zu der ein Zähler hoch- oder hinabzählt, sind frei wählbar, ohne daß Verluste bei der Genauigkeit in Kauf zu nehmen sind.

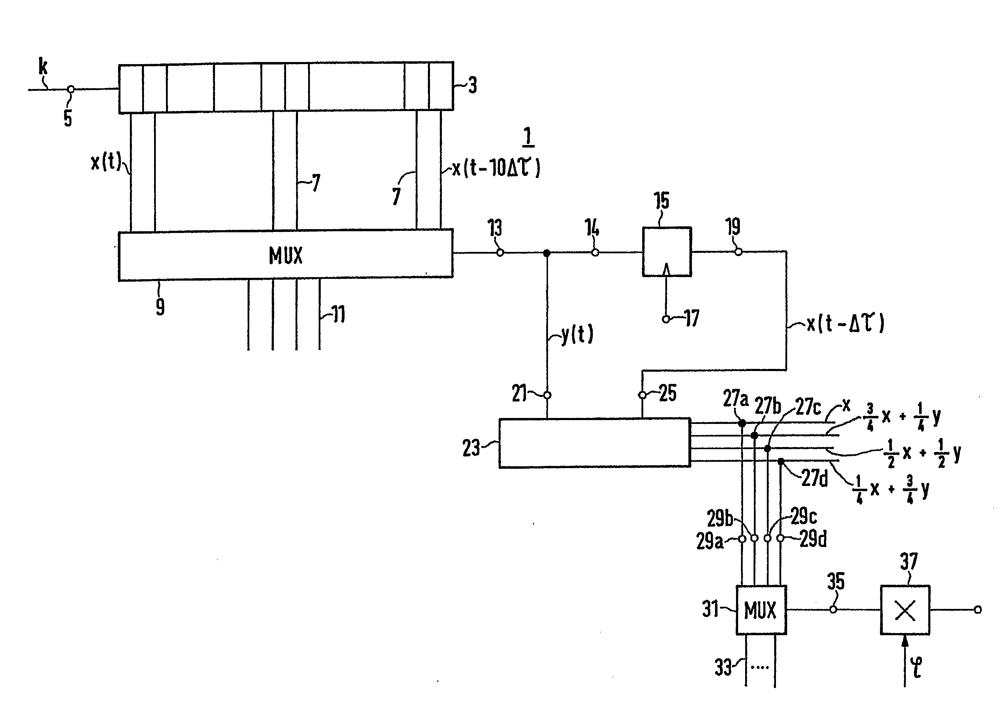

Weitere Vorteile und Ausgestaltungen der Erfindung ergeben sich aus der Beschreibung eines Ausführungsbeispiels anhand der Figur.

Die Figur zeigt eine digitale Verzögerungseinrichtung 1 für einen einzigen Ultraschallempfangskanal K eines Phased-Array-Geräts, das auf medizinischem Gebiet eingesetzt wird.

Nach der Figur umfaßt die Verzögerungseinrichtung 1 ein Schieberegister 3. Das Schieberegister 3 weist einen Eingang 5 und eine Anzahl z an Ausgängen 7 auf.

Die z Ausgänge 7 des Schieberegisters 3 sind an die z Eingänge eines ersten Multiplexers 9 gelegt. Der Multiplexer 9 weist weiterhin einen Steuereingang 11 und einen Ausgang 13 auf. In Abhängigkeit eines Steuersignals am Steuereingang 11 wird einer der Ausgänge 7 des Schieberegisters 3 an den Ausgang 13 des ersten Multiplexers 9 durchgeschaltet.

Vom Ausgang 13 des ersten Multiplexers 9 führt eine Verbindung zum Eingang 14 eines Registers 15. Das Register 15 weist weiter einen Eingang 17 für ein Taktsignal und einen Ausgang 19 auf. Ein am Eingang 14 des Registers 15 befindliches Ultraschallsignal x(t) wird mit dem nächsten Takt in das Register 15 eingeschrieben. Am Ausgang 19 des Registers 15 liegt dann das Ultraschallsignal x(t - $\Delta\tau$) an, wobei $\Delta\tau$ die Zeitdifferenz zwischen zwei Takten ist. Gleichzeitig liegt am Eingang 14 des Registers 15 das aufgrund des zuvor genannten nächsten Taktes aus dem Schieberegister 3 über den ersten Multiplexer 9 durchgeschaltete nachfolgende Ultraschallsignal y(t) an.

Der Ausgang 13 des ersten Multiplexers 9 ist weiterhin an einen ersten Eingang 21 eines Interpolators 23 gelegt. Mit einem zweiten Eingang 25 des Interpolators 23 ist der Ausgang 19 des Registers 15 verbunden.

Der Interpolator 23 weist vier Ausgänge 27a bis 27d auf, an welchen jeweils eine unterschiedliche Mischung der beiden gleichzeitig an den beiden Eingängen 21, 25 des Interpolators 23 liegenden Ultraschallsignale y(t) bzw. x(t - $\Delta\tau$) abgreifbar ist. Weist das Ultraschallsignal am ersten Eingang 21 des Interpolators 23 also z. B. den Wert y auf und das Ultraschallsignal am zweiten Eingang 25 den Wert x, so liegt beispielsweise an dem Ausgang 27a der Wert x an, am Ausgang 27b der Wert

$$3 \bullet \frac{x}{4} + \frac{y}{4},$$ am Ausgang 27c der Wert

$$\frac{x}{2} + \frac{y}{2}$$ und am Ausgang 27d der Wert

$$\frac{x}{4} + 3 \frac{y}{4}.$$ In diesem Fall handelt es sich um eine lineare Interpolation zwischen den beiden Ultraschallsignalwerten x und y. Ebensogut können andere mathematische Interpolationen zur Anwendung kommen.

Die Ausgänge 27a bis 27d des Interpolators 23 sind mit je einem Eingang 29a bis 29d eines zweiten Multiplexers 31 verbunden. Der zweite Multiplexer 31 weist einen zweiten Steuereingang 33 und einen zweiten Ausgang 35 auf. Der Ausgang 35 des zweiten Multiplexers 31 ist beispielsweise zur weiteren Datenverarbeitung an einen Multiplizierer 37 geführt, der später noch näher erläutert wird. Hier wird eine Multiplikation mit einem Faktor C durchgeführt.

Das Verfahren zur Verzögerung eines Ultraschallsignals, welches von einer Grenzfläche im Inneren eines Körpers reflektiert und mit einem Phased-Array-Applikator aufgenommen wurde, läuft folgendermaßen ab. An dem Eingang 5 des Schieberegisters 3 läuft dieses Ultraschallsignal x(t) ein. Dieses Ultraschallsignal x(t) ist beispielsweise das Echo eines Sendesignals, welches mit einer Mitten-Frequenz von z. B. 4 MHz gesendet wurde. Zum Erfassen des Kurvenverlaufs des Echosignals wird beispielsweise eine Taktfrequenz von 20 MHz verwendet. Bei 20 MHz beträgt die Zeit $\Delta\tau$ zwischen zwei Takten 50 nsec. Diese Abtastfrequenz wird auch zum Weitertakten der digitalen Bauelemente, also des Schieberegisters 3 des ersten Multiplexers 9, des Registers 15, des Interpolators 23 und des zweiten Multiplexers 31, verwendet. Ist das Schieberegister 3 beispielsweise 500 nsec "lang", so weist es 10 Ausgänge 7 auf, welche jeweils um $\Delta\tau$ = 50 nsec gegeneinander verzögerte Signale abgeben. Das Ultraschallechosignal x(t) kann also quantisiert in Schritten von $\Delta\tau$ = 50 nsec im Schieberegister 3 verzögert werden.

Entsprechend der gewünschten Fokuslage ist nun aber für das an den gezeigten Kanal K angeschlossene Wandlerelement beispielsweise eine Verzögerung $\tau$ um insgesamt z. B. 235 nsec wünschenswert. Aus dem Schieberegister 3 würde dann in einem Verfahren ohne den Interpolator 23 unter Inkaufnahme eines Fehlers von 15 ns der nächstliegende Wert, also 250 nsec, als Verzögerungszeit genommen werden.

Anders wird bei dem vorliegenden Verfahren und der Verzögerungseinrichtung vorgegangen. Über den ersten Multiplexer 9 wird der auf n × $\Delta\tau$ abgerundete Verzögerungswert an den Ausgang 13 des ersten Multiplexers 9 gelegt. Am Beispiel von 235 nsec ist dies eine Verzögerung um 200 nsec; also wird am vierten Abgriff des Schieberegisters 3 abgegriffen. Ein entsprechendes Steuersignal wird von einer zentralen Steuereinrichtung (nicht gezeigt) über den Steuereingang 11 dem ersten Multiplexer 9 zugeführt. Am Ausgang 13 des ersten Multiplexers 9 liegt also das Ultraschallsignal x(t - 4$\Delta\tau$) mit n = 4 an. Dieses Ultraschallsignal wird in das Register 15 eingeschrieben und einen Takt, also 50 nsec, später wieder ausgelesen. Am Ausgang 19 liegt dann das Echosignal x(t - 5Δτ) an; es wird an den zweiten Eingang 25 des Interpolators 23 gegeben. Gleichzeitig liegt am Ausgang 13 des ersten Multiplexers 9 und damit auch am ersten Eingang 21 des Interpolators 23 das lediglich um 4 Δτ verschobene nächste Ultraschallsignal y(t -4Δτ) an.

An den beiden Eingängen 21, 25 des Interpolators 23 liegen also immer zwei Ultraschallsignale x(t), y(t), die zeitlich um einen Takt, also um Δτ verschoben sind. Dieses ist in der Zeichnung mit den Symbolen y(t) am ersten Eingang 21 und x(t -Δτ) am zweiten Eingang 25 des Interpolators 23 angedeutet. Am zweiten Eingang 25 des Interpolators 23 liegt also immer das ältere Ultraschallsignal an.

Für den bereits geschilderten Fall eines linearen Interpolators 23 liegen an den vier Ausgängen 27a bis 27d des Interpolators 23 folgende Ultraschallsignale betragsmäßig an: Am Ausgang 27a das Ultraschallsignal x; am Ausgang 27b das Ultraschallsignal $\frac{3}{4}$ x + $\frac{1}{4}$ y; am Ausgang 27c das Ultraschallsignal $\frac{x}{2}$ + $\frac{y}{2}$ und am Ausgang 27d das Ultraschallsignal $\frac{1}{4}$x + $\frac{3}{4}$ y. Einen Takt Δτ weiter wäre der Wert am Ausgang 27a gleich y, am Ausgang 27b gleich $\frac{3}{4}$ y + $\frac{1}{4}$ z, am Ausgang 27c gleich $\frac{1}{2}$ y + $\frac{1}{2}$ z und am Ausgang 27d gleich $\frac{1}{y}$ y + $\frac{3}{4}$ z, wobei z das beim nächsten Takt dem Ultraschallsignal y folgende Ultraschallsignal bedeutet.

Um auf das Zahlenbeispiel zurückzukommen: Das Ultraschallsignal x ist um 250 nsec verzögert; das am Eingang 14 des Registers 15 befindliche Ultraschallsignal y ist lediglich um den Wert 200 nsec verzögert. Gewünscht ist aber der Wert eines Ultraschallsignals, welches z. B. um einen Verzögerungswert von 235 nsec verzögert ist. Die vier Werte des Ultraschallsignals an den Ausgängen 27a bis 27d sind aufgrund der Interpolation kontinuierlich auf den Ultraschallwert y übergeleitet. Das heißt, das Ultraschallsignal am Ausgang 27a gilt für eine Verzögerung um 250 nsec, das Ultraschallsignal am Ausgang 27b gilt für eine Verzögerung um 237,5 nsec, das Ultraschallsignal am Ausgang 27c gilt für eine Verzögerung um 225 nsec, und das Ultraschallsignal am Ausgang 27d gilt für eine Verzögerung um 212,5 nsec. Für den gewünschten Wert von 235 nsec ist also der Ausgang 27b mit dem nächstliegenden Wert 237.5 nsec über den zweiten Multiplexer 31 an den Ausgang 35 des zweiten Multiplexers 31 zur weiteren Datenverarbeitung durchzuschalten. Es ist lediglich ein Fehler von 2,5 ns (anstelle von 15 ns ohne Interpolation) vorhanden. Es wird also interpolatorisch ermittelt, welchen Wert das Ultraschallbildsignal bei einer Verzögerung im Empfänger von 235 nsec hätte haben können. Eine genauere Bestimmung des Wertes ist aufgrund der Taktfrequenz, die einer Zeitdifferenz von 50 nsec entspricht, nicht möglich gewesen.

Das oben für einen einzigen Ultraschallkanal K erläuterte Verfahren kann an sämtlichen Kanälen oder nur einem Teil der Kanäle eines Ultraschallgerätes angewendet werden.

Das am Ausgang 35 des zweiten Multiplexers 31 durchgeschaltete Ultraschallsignal wird so weiterverarbeitet, als ob es nach konventioneller Methode direkt am Ausgang des ersten Multiplexers 9 anläge. Die zeitliche Verschiebung um eine Taktlänge Δτ hat dabei keinen negativen Einfluß auf die Bildqualität.

Eine Weiterverarbeitung, die sich bei einem digitalen Verfahren problemlos anschließen läßt, ist die Multiplikation des Ultraschallsignals mit einer Konstanten. Damit kann eine Gewichtung sämtlicher Verzögerungskanäle vorgenommen und dadurch eine Aperturbelegung realisiert werden. Diese kann z. B. cos-förmig oder cos²-förmig vorgenommen werden. Durch diese Aperturbelegung werden die Nebenkeulenamplituden relativ zur Hauptkeule der Antenne verkleinert, und damit werden Mehrdeutigkeiten des Antennenrichtdiagramms reduziert. Diese Aperturbelegung ist bei konstantem Ausbreitungsmedium (z. B. Wasser) und in Normalenrichtung der Antenne symmetrisch zur Arraymitte. diese Symmetrie geht bei großen Schwenkwinkeln und vor allem durch die Echodämpfung des nicht homogenen Ausbreitungsmediums, z. B. im menschlichen Gewebe, verloren. Mit Hilfe des Multiplizierers 37 in jedem Verzögerungskanal K kann diese systembedingte "Gewichtung" in gewissen Grenzen kompensiert werden. Auch die durch die Interpolation bzw. die Phasenlage der Abtastung bedingten Amplitudenänderungen der Verzögerungskanäle können in gewissen Grenzen durch die Multiplikation mit einer Konstanten C kompensiert werden. Für einen Test, z. B. einem Selbsttest des Ultraschallgeräts, ist der Multiplizierer 37 ebenfalls vorteilhaft, da sich für jeden Verzögerungskanal K jedes Datum des AD-Wertebereichs dynamisch und statisch einstellen läßt. Auch die Abschaltung einzelner oder aller Kanäle K des Ultraschallgeräts ist auf diese Weise möglich.

Vorteil des Verfahrens bzw. der Verzögerungseinrichtung ist eine hohe Genauigkeit der Zeitverzögerung (im Beispiel der Ausführung eine Genauigkeit von ± 6,25 nsec) bei gleichzeitig relativ niedriger Abtastfrequenz von 20 MHz. Das Verhältnis von Abtastfrequenz zur Zeitauflösung ist also im Vergleich zu Maßnahmen ohne Interpolation wesentlich verbessert. Je nach Länge des Schieberegisters 3 sind auch sehr lange Verzögerungszeiten von bis zu 20 μsec und mehr vorstellbar. Die Zeitauflösung kann noch feiner gemacht werden und richtet sich nach dem Aufwand, der bei der Interpolation noch akzeptabel ist. So ist beispielsweise auch ein Interpolator 23 mit acht Ausgängen 27a bis 27h möglich. Auch andere Interpolationsformen als die lineare können zur Anwendung gelangen.

Zu den genannten Vorteilen kommen noch die Vorteile, die sich aus dem Einsatz der digitalen Technik an sich ergeben hinzu. So ist eine Multiplikation des Wertes des Ultraschall-Echosignals mit einer Konstanten C zur kontinuierlichen Aperturbelegung möglich. Beim Umschalten auf eine andere Zeitverzögerungsstufe entsprechend einer anderen Fokuslage während einer Ultraschallzeile entstehen durch die Digitaltechnik keine Umschaltspikes. Das heißt, während des Empfangs eines Ultraschallvektors sind viele Fokuslagen möglich, ohne daß man Bildstörungen aufgrund von Spikes erhält. Außerdem eröffnet sich die Möglichkeit, auch bei großen Aperturen eine exakte dynamische Fokussierung durchzuführen.

## Patentansprüche

1. Verfahren zur Verzögerung eines Ultraschall-Empfangssignals, welches von einer Grenzfläche im Innern eines Körpers reflektiert wurde, um einen vorgegebenen Verzögerungswert, bei dem das Empfangssignal mit einer Abtastfrequenz abgetastet wird, die so gewonnenen Abtastsignale digitalisiert werden und die digitalisierten Abtastsignale im Takt der Abtastfrequenz verzögert werden, dadurch gekennzeichnet, daß zwischen zwei benachbarten Abtastsignalen, deren Verzögerungswerte dem vorgegebenen Verzögerungswert am nächsten kommen, eine Mehrzahl von interpolierten Werten zu den benachbarten Abtastsignalen gebildet wird und daß aus den benachbarten Abtastsignalen und den interpolierten Werten dasjenige Signal oder derjenige Wert ausgewählt wird, dessen Verzögerung dem vorgegebenen Verzögerungswert am nächsten kommt.

2. Verfahren zur Verzögerung nach Anspruch 1, dadurch gekennzeichnet, daß drei interpolierte Werte gebildet werden.

3. Vorzögerungseinrichtung zur Durchführung des Verfahrens nach Anspruch 1 oder 2, die eine digital arbeitende mehrstufige Verzögerungseinrichtung (3) mit je einem Ausgang zwischen benachbarten Stufen umfaßt, deren einzelne Stufen jeweils die digitalisierten Abtastwerte des Ultraschall Empfangssignals im Takt der Abtastfrequenz verzögern, dadurch gekennzeichnet, daß die Eingänge einer ersten Auswahlschaltung (9, 15) jeweils mit den Ausgängen der Verzögerungseinrichtung (3) und zwei Ausgänge der ersten Auswahlschaltung jeweils mit zwei Eingängen eines Interpolators (23) verbunden sind, wobei die erste Auswahlschaltung (9, 15) zwei benachbarte Abtastwerte, deren Verzögerungswerte einem vorgegebenen Verzögerungswert am nächsten kommen, an den Interpolator (23) übergibt, daß der Interpolator (23) eine Anzahl von Ausgängen (27a, 27b, 27c, 27d) aufweist, die einen der beiden benachbarten Abtastwerte und eine Mehrzahl von zu den beiden benachbarten Abtastwerten interpolierten Werten ausgeben und zwar jeweils einen Wert pro Ausgang, und daß eine zweite Auswahlschaltung (31) mit den Ausgängen (27a bis 27d) des Interpolator (23) verbunden ist, wobei die Auswahlschaltung (31) dasjenige abgetastete Signal oder denjenigen interpolierten Wert an ihrem Ausgang (35) ausgibt, dessen Verzögerungswert dem vorgegebenen Verzögerungswert am nächsten kommt.

4. Verzögerungseinrichtung nach Anspruch 3, dadurch gekennzeichnet, daß der Interpolator (23) ein linearer Interpolator ist.

5. Verzögerungseinrichtung nach Anspruch 3 oder 4, dadurch gekennzeichnet, daß die erste Auswahlschaltung (9, 15) einen Multiplexer (9) umfaßt, dessen Eingänge mit den Ausgängen (7) der Verzögerungseinrichtung (3) verbunden sind und dessen Ausgang mit einem Register (15) verbunden ist, und daß der Eingang (14) und der Ausgang (19) des Registers (15) mit den beiden Eingängen (21 bzw. 25) des Interpolators verbunden ist.

6. Verzögerungseinrichtung nach einem der Ansprüche 3 bis 5, dadurch gekennzeichnet, daß die zweite Auswahlschaltung (31) einen Multiplexer umfaßt.

7. Verzögerungseinrichtung nach einem der Ansprüche 3 bis 6, dadurch gekennzeichnet, daß der Ausgang (35) der zweiten Auswahlschaltung mit dem Eingang eines Multiplikators (37) verbunden ist.

## Revendications

1. Procédé pour retarder un signal ultrasonore de réception, qui a été réfléchi par une interface située à l'intérieur d'un corps, d'une valeur de retard prédéterminée, et selon lequel on échantillonne le signal de réception avec une fréquence d'échantillonnage, on numérise les signaux d'échantillonnage ainsi obtenus et on retarde les signaux d'échantillonnage numérisés, à la cadence de la fréquence d'échantillonnage, caractérisé par le fait qu'entre deux signaux voisins d'échantillonnage, dont les valeurs de retard sont les plus proches de la valeur de retard prédéterminée, on forme une multiplicité de valeurs interpolées à partir des signaux d'échantillonnage voisins et que parmi les signaux d'échantillonnage voisins et les valeurs interpolées on sélectionne le signal ou la valeur, dont le retard est le plus proche de la valeur de retard prédéterminée.

2. Procédé de retardement suivant la revendication 1, caractérisé par le fait qu'on forme trois valeurs interpolées.

3. Dispositif de retardement et de mise en oeuvre du procédé suivant la revendication 1 ou 2, comprenant un dispositif de retardement à plusieurs étages (3) fonctionnant numériquement, et comportant une sortie respective présente entre des étages voisins et dont les étages individuels retardent les valeurs d'échantillonnage numérisées du signal ultrasonore de réception à la cadence de la fréquence d'échantillonnage, caractérisé par le fait que les entrées d'un premier circuit de sélection (9, 15) sont raccordées respectivement aux sorties du circuit de retardement (3), et deux sorties du premier circuit de sélection sont raccordées respectivement à deux entrées d'un interpolateur (23), le premier circuit de sélection (9, 15) retransmettant deux valeurs d'échantillonnage voisines, dont les valeurs de retard sont les plus proches d'une valeur de retard prédéterminée, que l'interpolateur (23) possède un nombre de sorties (27a, 27b, 27c, 27d), qui délivrent l'une des deux valeurs d'échantillonnage voisines et une multiplicité de valeurs interpolées par rapport aux deux valeurs d'échantillonnage voisines, à savoir respectivement une valeur pour chaque sortie, qu'un second circuit de sélection (31) est relié aux sorties (27a à 27d) de l'interpolateur (23), le circuit de sélection (31) délivrant, sur sa sortie (35), le signal échantillonné ou la valeur interpolée, dont la valeur de retard est la plus proche de la valeur de retard prédéterminée.

4. Dispositif de retardement suivant la revendication 3, caractérisé par le fait que l'interpolateur (23) est un interpolateur linéaire.

5. Dispositif de retardement suivant la revendication 3 ou 4, caractérisé par le fait que le premier circuit de sélection (9, 15) contient un multiplexeur (9), dont les entrées sont reliées aux sorties (16) du dispositif de retardement (3) et dont la sortie est raccordée à un registre (15), et que l'entrée (14) et la sortie (19) du registre (15) sont reliées aux deux entrées (21 ou 25) de l'interpolateur.

6. Dispositif de retardement suivant l'une des revendications 3 à 5, caractérisé par le fait que le second circuit de sélection (31) contient un multiplexeur.

7. Dispositif de retardement suivant l'une des revendications 3 à 9, caractérisé par le fait que la sortie (35, du second circuit de sélection est reliée à l'entrée d'un multiplicateur (37).

**Claims**

1. A method for delaying an ultrasonic reception signal that has been reflected from a boundary surface inside a body, by a predetermined delay value, in which the reception signal is sampled at a sampling frequency, the sampling signals obtained in this way are digitalised and the digitalised sampling signals are delayed in accordance with the timing of the sampling frequency, characterised in that between two successive sampling signals whose delay values come closest to the predetermined delay value a plurality of interpolated values are generated from the successive sampling signals and that from the successive sampling signals and the interpolated values the respective signal or the respective value is selected whose delay comes closest to the predetermined delay value.

2. A method for delay according to claim 1, characterised in that three interpolated values are generated.

3. A delay apparatus for carrying out the method according to claim 1 or claim 2, which includes a digitally operating multi-step delay device (3) having an output between each two successive steps, the individual steps of which delay the digitalised sampling values of the ultrasonic reception signal in accordance with the timing of the sampling frequency, characterised in that the inputs of a first selector module (9, 15) are connected to the respective outputs of the delay device (3) and two outputs of the first selector module are respectively connected to two inputs of an interpolator (23), the first selector module (9, 15) supplying to the interpolator (23) two successive sampling values whose delay values come closest to a predetermined delay value, in that the interpolator (23) has a plurality of outputs (27a, 27b, 27c, 27d) each of which outputs a value (one per output) that is one of the two successive sampling values or one of a plurality of values interpolated between the two successive sampling values, and that a second selector module (31) is connected to the outputs (27a to 27d) of the interpolator (23), the selector module (31) outputting at its output (35) the sampled signal or the interpolated value whose delay value comes closest to the predetermined delay value.

4. A delay apparatus according to claim 3, characterised in that the interpolator (23) is a linear interpolator.

5. A delay apparatus according to claim 3 or claim 4, characterised in that the first selector module (9, 15) includes a multiplexer (9) whose inputs are connected to the outputs (7) of the delay device (3) and that the input (14) and the output (19) of the register (15) are connected to the two inputs (21 and 25) of the interpolator.

6. A delay apparatus according to any one of claims 3 to 5, characterised in that the second selector module (31) includes a multiplexer.

7. A delay apparatus according to any one of claims 3 to 6, characterised in that the output (35) of the second selector module is connected to the input of a multiplier (37).